# EUROPÄISCHE PATENTSCHRIFT

(11) **EP 3 910 156 B1**
(45) Veröffentlichungstag und Bekanntmachung des Hinweises auf die Patenterteilung: **19.07.2023**
(21) Anmeldenummer: 21156266.5
(22) Anmeldetag: 10.02.2021
(51) Int. Cl.: E06B 3/968, E06B 9/52, E06B 3/964, F16B 7/04

(54) **INSEKTEN- UND/ODER POLLENSCHUTZGITTER**
INSECT AND / OR POLLEN SCREEN
GRILLE DE PROTECTION CONTRE LES INSECTES ET/OU LES POLLEN

(30) Priorität: 14.05.2020 DE 202020102733 U
(43) Veröffentlichungstag der Anmeldung: 17.11.2021
(73) Patentinhaber: MACS HOLDING GmbH, 91555 Feuchtwangen (DE)
(72) Erfinder: MENDL, Marco, 91572 Bechhofen (DE); KOCHLER, Christina, 91550 Dinkelsbühl (DE)
(74) Vertreter: FDST Patentanwälte

(56) Entgegenhaltungen:
- EP-B1- 1 892 366
- DE-A1-102012 023 546
- DE-A1-102015 015 654
- GB-A- 1 381 507
- US-B1- 6 341 465

## Beschreibung

Die Erfindung betrifft ein Insekten- und/oder Pollenschutzgitter mit einem Rahmensystem mit einer Anzahl von Profilleisten, die in Rahmenecken mittels Eckverbindern gefügt sind. Sie betrifft weiter ein Rahmensystem sowie einen Eckverbinder.

Zum Schutz von Gehäuseöffnungen, wie beispielsweise Fenster- oder Türöffnungen (Balkon- oder Terrassentüren), dienen als Rahmensysteme montierbare Insekten-, Partikel- oder Pollenschutzgitter, die in einen Profilrahmen eingesetzt sind, der wiederum die Gebäudeöffnung möglichst vollflächig abdecken soll. Hierbei soll eine möglichst flexible Anpassung an unterschiedliche Öffnungsgrößenermöglicht sein. Wünschenswert ist sowohl eine möglichst unproblematische Rahmenmontage als auch ein einfaches Einsetzen des Schutzgitters oder Gittergewebes in den Profilrahmen als Rahmensystem. Zudem sollte auch eine Demontage möglich sein, insbesondere um einzelne Teile auszutauschen. Ferner sollte eine sichere Halterung des mit dem Schutzgittergewebe (Gitternetz oder Tuch) bespannten Rahmensystems bzw. des Profilrahmens am Bestimmungsort, insbesondere an einer Tür oder einem Fenster, gewährleistet sein. Darüber hinaus sollte das Gesamtsystem möglichst flexibel sein, um eine Anpassung an unterschiedliche, vor Ort vorgefundene Randbedingungen für die Montage zu ermöglichen.

Derartige Insekten- oder Pollenschutzsysteme werden üblicherweise nach dem Baukastenprinzip als Montageset zur individuellen Anpassung an unterschiedliche Fenster- oder Türabmessungen bereitgestellt, so dass das System flexibel an praktisch alle gängigen Gebäudeöffnungen bzw. Tür- oder Fensterrahmen angepasst werden kann. Herkömmlicherweise umfasst ein derartiges Montageset eine Anzahl an ablängbaren Profilleisten und ein Gittergewebe im Übermaß. Die Profilleisten werden mittels Eckverbindern zu dem rechtwinkeligen Rahmensystem montiert, an dem das Gittergewebe befestigt wird. Die Profilleisten sind als Hohlprofile mit einer Fügekammer zur stirnseitigen Aufnahme von zueinander rechtwinkeligen Fügeschenkeln der einsteckbaren Eckverbinder ausgeführt.

Ein Rahmensystem für ein Insekten- oder Pollenschutzgitter zur Anbringung an einem Fenster- oder Türrahmen ist beispielsweise aus der DE 10 2012 023 546 A1 bekannt. Das bekannte Rahmensystem umfasst eine Anzahl von Profilleisten, die über einteilige (einstückige) Eckverbinder miteinander verbunden sind. Die Profilleisten sind als Hohlkammerprofile ausgebildet, in welche Fügeschenkeln der Eckverbinder eingesetzt sind. Ein zum Fensterrahmen hin offener Aufnahmekanal dient zur Aufnahme eines Keders, mit dem ein Gittergewebe an den Profilleisten angebracht und befestigt ist. Das Gittergewebe deckt die Rahmenöffnung des Rahmensystem und damit die Fenster- bzw. Türöffnung gegen eindringende Fremdkörper luftdurchlässig ab.

Bei der Montage eines derartigen Rahmensystems werden typischerweise zunächst die Profilleisten abgelängt und das Gittergewebe zugeschnitten. Anschließend werden herkömmlicherweise Dichtungsbürsten in profilrückseitige, erste Aufnahmekammern eingezogen. Die Dichtungsbürsten gleichen die Auflage des Rahmensystems an unebenen Auflageflächen aus, so dass sie im Bereich der Profilleisten sicher vor dem Eindringen von Schmutz und Insekten abdichten. In einem nächsten Schritt werden die mit Dichtungsbürsten bestückten Profilleisten mittels der Eckverbinder zu einem rechtwinkligen Rahmensystem montiert. Abschließend wird das Gittergewebe mittels eines Halteelements, typischerweise einer kederartigen Klemmleiste, die in eine rückseitige zweite Aufnahmekammer der Profilleisten einklemmbar ist, in das montierte Rahmensystem eingespannt.

Aus der EP 1 892 366 B1 ist ein Fliegengitterrahmen mit Profilen und mit Rahmenverbindern bekannt, die ein Zentralsegment und angeformte Zapfensegmente aufweisen, die in Aufnahmekammern der Profile stirnseitig einschiebbar und darin klemmend gehalten sind. Die Zapfensegmente weisen hierzu ein Basiselement und ein Gleitelement mit jeweils dreieckigem Querschnitt und schräg verlaufender Gleitfläche auf, so dass durch Verschieben des Gleiterelementes auf dem Basiselement der Außenumfang des dann quaderförmigen Zapfensegmentes vergrößert und das Zapfensegment an allen Innenflächen des Profils verklemmt wird.

Der Erfindung liegt daher die Aufgabe zugrunde, ein Insekten- und/oder Pollenschutzgitter mit einem Rahmensystem anzugeben, das besonders einfach, stabil und optisch möglichst ansehnlich zusammenbaubar ist. Insbesondere sollen die Eckverbinder möglichst einfach und zuverlässig mit den Profilleiten verbunden bzw. in den Rahmenecken montierbar sein. Zweckmäßigerweise sollen die Bauteile und hierbei auch die Eckverbinder des Rahmensystems möglichst raumsparend sein, so dass eine die zu montierenden Bauteile enthaltende Umverpackung möglichst geringe Abmessungen aufweist bzw. materialsparend ist. Des Weiteren sollen ein solches Rahmensystems und ein hierfür besonders geeigneter Eck- oder Profilverbinder angegeben werden.

Bezüglich des Insekten- und/oder Pollenschutzgitter wird die gennannte Aufgabe mit den Merkmalen des Anspruchs 14 und hinsichtlich des Rahmensystems mit den Merkmalen des Anspruchs 13 sowie bezüglich des Eckverbinders mit den Merkmalen des Anspruchs 1 erfindungsgemäß gelöst. Vorteilhafte Ausgestaltungen und Weiterbildungen sind Gegenstand der Unteransprüche.

Hierzu umfasst das nachfolgend lediglich als Insektenschutzgitter bezeichnete Insekten- und/oder Pollenschutzgitter ein Rahmensystem mit einer Anzahl an Profilleisten, die vorzugsweise als im Wesentlichen rechteckige oder auch quadratische Hohlprofile mit einer Profilinnenkontur zur Aufnahme von Eckverbindern ausgeführt sind. Mittels der Eckverbinder werden die Profilleisten gefügt. Hierzu sind die Eckverbinder geeigneter Weise in jeweils eine Fügekammer zweier Profilleisten zur Herstellung der Rahmenecke profilstirnseitig einsteckbar oder eingesteckt.

Die Eckverbinder sind zweiteilig ausgeführt, wobei der jeweilige Eckverbinder einen ersten Fügeschenkel und einem mit diesem fügbaren zweiten Fügeschenkel aufweist. Die Fügeschenkel weisen einen ersten Schenkelabschnitt zur Verbindung mit der Profilleiste und einen zweiten, insbesondere rechteckigen, vorzugsweise etwa quadratischen, Schenkelabschnitt mit einer Fügekontur auf. Der erste Fügeschekel weist eine erste Fügekontur, und der zweite Fügeschekel weist eine mit der ersten Fügekontur korrespondierende, vorzugsweise komplementäre oder gegengleiche, zweite Fügekontur auf.

Der Eckverbinder mit zwei miteinander fügbaren oder gefügten Fügeschenkeln ist zum Verbinden, insbesondere formschlüssigen Steckverbinden, von zwei, insbesondere zugeschnittenen, Profilleisten in einer Rahmenecke eines Rahmensystems vorgesehen und eingerichtet. Im Fügezustand des Eckverbinders sind die beiden Fügeschenkel zueinander rechtwinklig angeordnet.

Die Fügekontur des ersten Fügeschenkels ist eine Ausnehmung oder Öffnungskontur, während die Fügekontur des zweiten Fügeschenkels ein Fügezapfen ist, welcher in die als Ausnehmung bzw. Öffnungskontur ausgebildete Fügekontur des ersten Fügeschenkels formschlüssig eingreift. Die Fügekonturen sind mehreckig, insbesondere dreieckig, vorzugsweise mit gerundeten Ecken ausgeführt. Die Fügekonturen können auch rechteckig oder quadratisch ausgebildet sein.

Unter einem "Formschluss" oder einer "formschlüssigen Verbindung" zwischen wenigstens zwei miteinander verbundenen Teilen wird hier und im Folgenden insbesondere verstanden, dass der Zusammenhalt der miteinander verbundenen Teile zumindest in einer Richtung durch ein unmittelbares Ineinandergreifen von Konturen der Teile selbst oder durch ein mittelbares Ineinandergreifen über ein zusätzliches Verbindungsteil erfolgt. Das "Sperren" einer gegenseitigen Bewegung in dieser Richtung erfolgt also formbedingt.

Gemäß einer geeigneten Weiterbildung umgreift der Schenkelabschnitt des einen Fügeschenkels des Eckverbinders den Schenkelabschnitt des anderen Fügeschenkels dieses Eckverbinders zumindest teilweise. Hierzu ist zweckmäßigerweise die Ausnehmung bzw. Öffnungskontur als erste Fügekontur in einem Schenkelboden vorgesehen, während der Fügezapfen als zweite Fügekontur an eine Schenkelplatte angeformt ist. Vorzugsweise ist am Schenkelboden der ersten Fügekontur eine, insbesondere rechteckförmige, vorzugsweise quadratische, mindestens einseitig offene Schenkelwand angeformt. Im Fügezustand der beiden Fügeschenkel des Eckverbinders übergreift die Schenkelwand die Schenkelplatte des anderen Fügeschenkels an zwei gegenüberliegenden Seiten und an der dem zur Verbindung mit der Profilleiste dienenden ersten Schenkelabschnitt abgewandten Stirnseite.

Um die Fügeverbindung der beiden Fügeschenkel des Eckverbinders zu sichern, können die beiden Fügeschenkel beispielsweise miteinander verclipst oder verrastet sein. Hierzu kann beispielsweise eine Nut-Feder-Verbindung oder eine Keilverbindung zwischen den Fügeschenkel an oder im Bereich deren zweiten Schenkelabschnitte vorgesehen sein. Auch kann eine kraftschlüssige Verbindung der beiden Fügeschenkel des Eckverbinders nach Art einer Presspassung vorgesehen sein. Vorteilhafterweise ist zur Sicherung der Fügeverbindung ein Bolzen, insbesondere ein Steckbolzen oder ein Schraubbolzen, vorgesehen, mit dem die Fügeschenkel gegeneinander bzw. miteinander verriegelt werden und somit, insbesondere lösbar, an- bzw. miteinander fixiert sind. Geeigneter Weise sind hierzu in den zweiten Schenkelabschnitten der Fügeschenkel miteinander fluchtende Bolzenkanäle für den Bolzen vorgesehen.

In einer typischen Ausführungsform ist das Rahmensystem nach Art eines Baukastenprinzips, insbesondere zur Selbstmontage, ausgeführt. Die Profilleisten und das Gittergewebe sind hierzu in verschiedenen (Norm-)Größen hergestellt, so dass ein individuelles Rahmensystem für verschiedene Gebäudeöffnungen zusammengestellt werden kann. Dadurch wird die Flexibilität des Rahmensystems einfach sowie vorteilhaft erhöht und somit eine Anpassung an unterschiedliche, vor Ort vorgefundene Randbedingungen für die Montage ermöglicht. Hierzu sind die Profilleisten insbesondere ablängbar ausgeführt. Alternativ können auch teleskopartige Profilleisten bereitgestellt werden, so dass die Profilleisten verschiebbar zu Längs- und Querprofile zusammengesetzt werden können und ein Ablängen der Profilleisten nicht erforderlich ist.

Die Profilleisten und/oder die Eckverbinder können aus Kunststoff oder aus Metall, insbesondere aus Aluminium, hergestellt sein. Die Vorderseite der Profilleisten ist im Wesentlichen glatt ausgeführt, so dass ein optisch ansehnliches Rahmensystem gegeben ist. Auf der im Montagezustand einem Fenster- oder Türrahmen zugewandten und somit abgedeckten Rückseite ist eine Anzahl an Profilsschlitzen angeordnet, über welche Dichtbürsten und/oder kederartige Funktionselemente zur Befestigung des Gittergewebes in jeweilige Aufnahmekammern der Profilleisten des Rahmensystems einziehbar und/oder einpressbar sind. Vorteilhafterweise weisen die Profilleisten mindestens eine in Profillängsrichtung verlaufende Fügekammer zur Aufnahme des ersten Schenkelabschnitts des jeweiligen Fügeschenkels des Eckverbinders auf.

Die mit der Erfindung erzielten Vorteile bestehen insbesondere darin, dass mittels der zweiteiligen Eckverbinder mit deren miteinander fügbaren bzw. verbindbaren Fügeschenkel einerseits eine besonders einfache und fehlersichere Eckmontage der Profilleisten zum (Insektenschutz-)Rahmensystem ermöglicht ist. So können die Fügeschenkel bereits mit der entsprechenden Profilleiste vormontiert werden, bevor die Eckverbindung mittels einfachen Fügens der beiden Fügeschenkel erfolgt. Der jeweilige Eckverbinder ist hierbei verdrehsicher, dies bedeutet nicht gelenkig, sondern starr, so dass die Eckverbinder und die damit gefügten Profilleisten nicht um eine Drehachse gegeneinander verschwenkbar sind.

Andererseits benötigen die Fügeschenkel aufgrund deren im Vergleich zu einem einteiligen oder gelenkigen Eckverbinder geringen und somit raumsparenden Abmessungen weniger Raum in einer Umverpackung eines als Bausatz bereitgestellten Insektenschutzgitters bzw. Rahmensystems. Dadurch kann die Umverpackung entsprechend kleiner und materialsparender ausgebildet sein.

Nachfolgend werden Ausführungsbeispiele der Erfindung anhand einer Zeichnung näher erläutert. Es zeigen:
- Fig. 1: in einer Rückansicht ein montiertes Insektenschutzfenster mit einem Rahmensystem aus quer und längs angeordneten Profilleisten, die in den Eckbereichen mittels Eckverbindern verbunden sind, sowie mit einem eingespannten Gittergewebe als Insektenschutz,
- Fig. 2: in einem Ausschnitt II aus Fig. 1 die rechte obere Rahmenecke des Rahmensystems in Vorderansicht in größerem Maßstab mit einem gefügten Eckverbinder zweier Profilleisten (Längs- und Querprofil),
- Fig. 3 und 4: den zweiteiligen Eckverbinder mit einem ersten und zweiten Fügeschenkel in einer Explosionsdarstellung bzw. in gefügter Vorderansicht, und
- Fig. 5 und 6: den zweiteiligen Eckverbinder mit dem ersten und zweiten Fügeschenkel in einer Explosionsdarstellung bzw. in gefügter Rückseitenansicht.

Einander entsprechende Teile und Größen sind in allen Figuren stets mit den gleichen Bezugszeichen versehen.

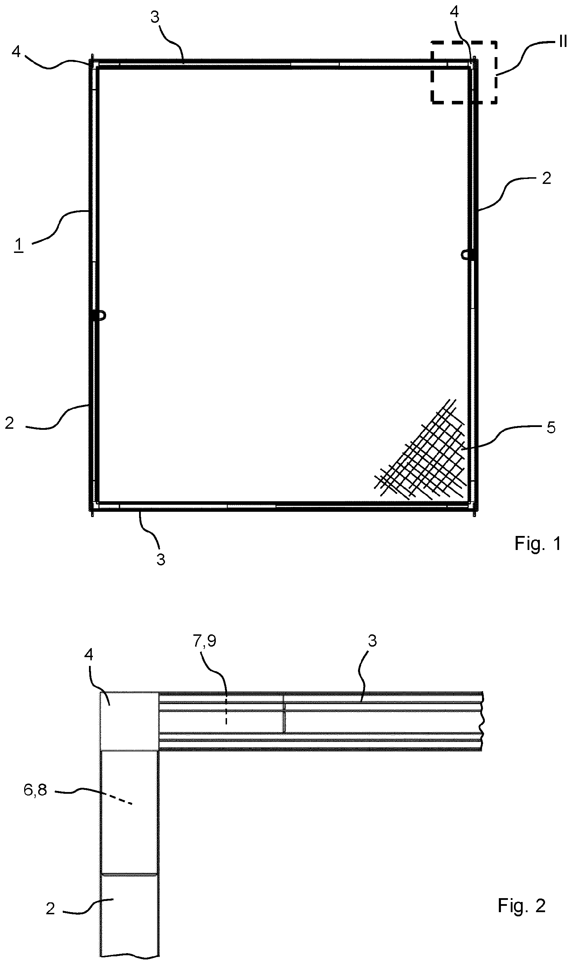

Die Fig. 1 zeigt in Rückansicht ein als Insekten- oder Pollenschutzfenster montiertes Rahmensystem 1 aus Profilleisten als Längs- und Querprofile 2 bzw. 3, die in den Rahmenecken (Rahmeneckbereichen) senkrecht zueinander montiert sind. Hierzu sind jeweils ein beispielsweise an das gewünschte Fenstermaß einer Gebäude-Fensteröffnung oder eines Fensterrahmens angepasstes (horizontal verlaufendes) Querprofil 3 und jeweils ein (vertikal verlaufendes) Längsprofil 2 mittels Eckverbindern 4 stabil, insbesondere ungelenkig, in den vier Rahmenecken verbunden. Die Längsprofile 2 und die Querprofile 3 sind im Wesentlichen identische Aluminium- oder Kunststoff-Profilleisten als Hohlprofile, die lediglich in deren abgelängten Abmessungen und Montageorientierung abweichen.

Auf der im Montagezustand rückseitigen Fläche des Rahmensystems 1 ist an den Profilleisten 2, 3 ein Gittergewebe 5 für den Insekten- oder Pollenschutz (Partikelschutz) montiert. Die Befestigung des Gittergewebes 5 erfolgt in nicht näher dargestellter Art und Weise mittels kederartigen, vorzugsweise flexiblen Klemmleisten, die in profil- beziehungsweise rahmenrückseitig in Profillängsrichtung geschlitzte Aufnahmekammern im Zuge der Montage einpressbar sind. Das Rahmensystem 1 kann in nicht näher dargestellter Art und Weise auch mit teleskopartig justierbaren Profilleisten inklusive Ausgleichsprofilen ausgeführt sein, welche beispielsweise bereits einen Kanal für ein Dichtungselement, insbesondere in Form einer bürstenartigen Dichtleiste, aufweist.

Fig. 2 zeigt ausschnittsweise die rechte obere Rahmenecke des Rahmensystems in Vorderansicht und in größerem Maßstab. Im Bereich des dortigen Eckverbinders 4 sind die Profilleisten transparent veranschaulicht, so dass zueinander senkrechte (rechtwinklige) Fügeschenkel 6, 7 des Eckverbinders 4 und deren Sitz in einer zugeordneten Fügekammer 8, 9 der Profilleisten 2 bzw. 3 erkennbar sind.

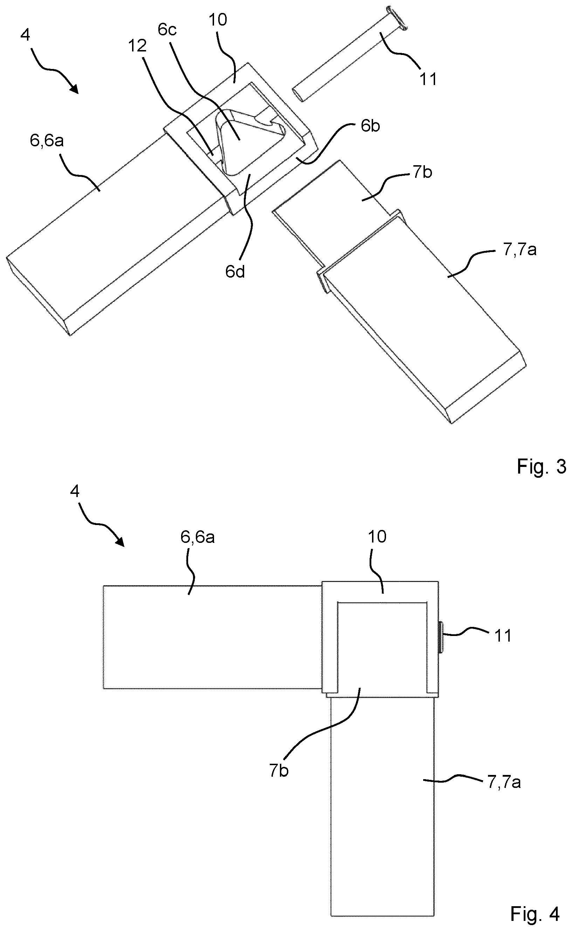

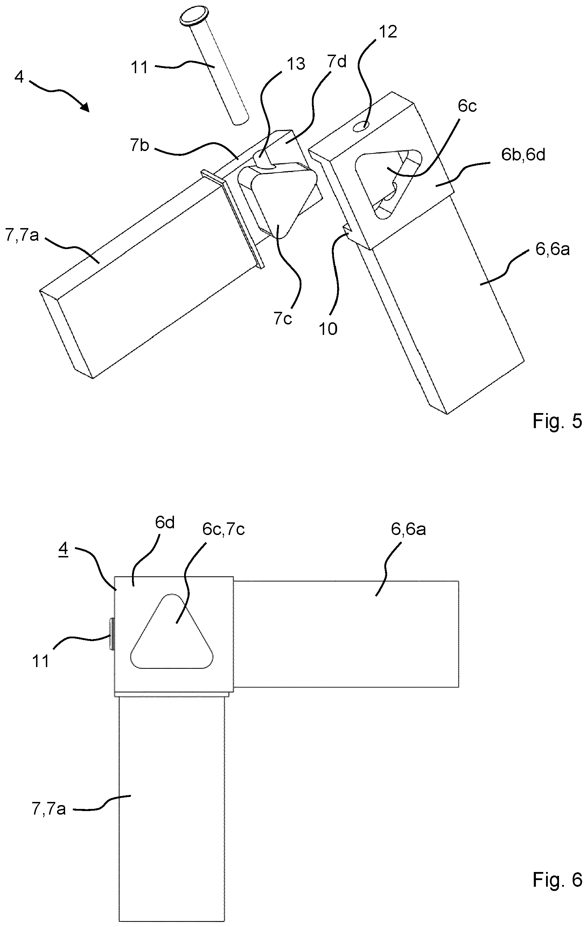

Wie aus den Figuren 3 und 5 ersichtlich ist, ist der jeweilige Eckverbinder 4 zweiteilig ausgeführt. Die Figuren 4 und 6 zeigen den Eckverbinder 4 im Fügezustand in Vorderansicht (Fig. 4) bzw. in Rückansicht (Fig. 6).

Der Eckverbinder 4 weist den ersten Fügeschenkel 6 und den mit diesem fügbaren zweiten Fügeschenkel 7 auf. Der Fügeschenkel 6 weist einen ersten Schenkelabschnitt 6a zur Verbindung mit der Profilleiste 2, hier dem Längsprofil, und einen zweiten Schenkelabschnitt 6b mit einer Fügekontur 6c in Form einer Ausnehmung oder Öffnungskontur (Fig. 3) auf. Der andere Fügeschenkel 7 weist einen ersten Schenkelabschnitt 7a zur Verbindung mit der Profilleiste 3, hier dem Querprofil, und einen zweiten Schenkelabschnitt 7b mit einer Fügekontur 7c in Form eines mehreckigen Fügezapfens (Fig. 5) auf. Die ersten Schenkelabschnitte 6a, 7a der beiden Fügezapfen 6 bzw. 7 des Eckverbinders 4 sind im Ausführungsbeispiel etwa quadratischen.

Die Fügekonturen 6c und 7c sind korrespondierend (komplementäre, gegengleich) und im Ausführungsbeispiel dreieckförmig mit abgerundeten Ecken. Hierdurch können die beiden Fügezapfen 6, 7 fehler- und verdrehsicher miteinander gefügt (verbunden) werden. Im Fügezustand (Figuren 4 und 6) greift der Fügezapfen 7c des (zweiten) Fügeschenkels 6 in die korrespondierende Öffnungskontur 6c des (ersten) Fügeschenkels 6 unter Herstellung einer formschlüssigen Steckverbindung ein. Im Fügezustand des Eckverbinders 4 sind die beiden Fügeschenkel 6, 7 zueinander rechtwinklig angeordnet sind.

Die Ausnehmung bzw. Öffnungskontur als Fügekontur 6c des ersten Fügeschenkel 6 ist in einem Schenkelboden 6d vorgesehen, während der Fügezapfen als Fügekontur 7c des zweiten Fügeschenkels 7 an eine Schenkelplatte 7d angeformt ist.

Der Schenkelabschnitt 6d des einen Fügeschenkels 6 des Eckverbinders 4 umgreift den Schenkelabschnitt 7b des anderen Fügeschenkels 7 dieses Eckverbinders 4 teilweise. Am Schenkelboden 6d der ersten Fügekontur 6c ist eine dreiseitig geschlossene und zum erster Schenkelabschnitt 7a des anderen Fügeschenkels 7 hin offene Schenkelwand 10 angeformt.

Im Fügezustand der beiden Fügeschenkel 6, 7 des Eckverbinders 4 übergreift die Schenkelwand 10 die Schenkelplatte 7d des anderen Fügeschenkels 6 an zwei gegenüberliegenden Seiten und an derjenigen Stirnseite, welche dem zur Verbindung mit der Profilleiste 2 dienenden ersten Schenkelabschnitt 7a abgewandt ist. Mit anderen Worten umgreift die Schenkelwand 10 den zweiten Schenkelabschnitt 7b des (zweiten) Fügeschenkels 7 des Eckverbinders 4 vorzugsweise derart, dass im Fügezustand der Fügeschenkel 6, 7 der zweiter Schenkelabschnitt 7b des entsprechenden Fügeschenkels 7 im zweiter Schenkelabschnitt 6b des anderen Fügeschenkels 6 fluchtend einliegt. Dabei fluchtet auch der Fügezapfen 7c mit dem Schenkelboden 6d des Fügeschenkels 6 auf der Rückseite dessen zweiten Schenkelabschnitts 6b, wobei der Fügezapfen 7c in der Öffnungskontur 6c vollständig einsitzt, aus dieser jedoch nicht herausragt.

Um die Fügeverbindung der beiden Fügeschenkel des Eckverbinders 4 zu sichern, ist eine Steck- oder Schraubbolzen 11 vorgesehen, mit dem die Fügeschenkel 6 und 7 gegen- bzw. miteinander verriegelt werden. Hierzu sind in den zweiten Schenkelabschnitten 6b und 7b der beiden Fügeschenkel 6, 7 miteinander fluchtende Bolzenkanäle 12, 13 zur Aufnahme des Bolzens 11 vorgesehen. Die miteinander fluchtenden Bolzenkanäle 12, 13 durchsetzen die Fügekonturen 6c und 7c der Schenkelabschnitte 6b, 7b der Fügeschenkel 6 bzw. 7.

In einer typischen Ausführungsform ist das Rahmensystem 1 als Montageset ausgeführt. Die Profilleisten 2, 3 und das Gittergewebe 5 sind in verschiedenen Grö-ßen hergestellt, so dass ein individuelles Insektenschutzgitter bzw. Rahmensystem 1 für verschiedene Gebäudeöffnungen zusammengestellt werden kann. Die Profilleisten 2, 3 und die Eckverbinder 4 können aus Kunststoff oder aus Metall, insbesondere aus Aluminium oder Edelstahl, hergestellt sein.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen.

### Bezugszeichenliste

- 1: Rahmensystem
- 2: Profilleiste/Längsprofil
- 3: Profilleiste/Querprofil
- 4: Eckverbinder
- 5: Gittergewebe
- 6: (erster) Fügeschenkel
- 6a: erster Schenkelabschnitt
- 6b: zweiter Schenkelabschnitt
- 6c: Füge-/Öffnungskontur
- 6d: Schenkelboden
- 7: (zweiter) Fügeschenkel
- 7a: erster Schenkelabschnitt
- 7b: zweiter Schenkelabschnitt
- 7c: Fügekontur/-zapfen
- 7d: Schenkelplatte
- 8,9: Fügekammer
- 10: Schenkelwand
- 11: Bolzen
- 12,13: Bolzenkanal

## Patentansprüche

1. Eckverbinder (4) zum formschlüssigen Steckverbinden von zwei Profilleisten (2, 3) in einer Rahmenecke eines Rahmensystems (1),
- wobei der Eckverbinder (4) einen ersten Fügeschenkel (6) und einem mit diesem fügbaren zweiten Fügeschenkel (7) aufweist,
- wobei die Fügeschenkel (6, 7) einen ersten Schenkelabschnitt (6a, 7a) zur Verbindung mit der Profilleiste (2, 3) und einen zweiten Schenkelabschnitt (6b, 7b) mit einer mehreckigen Fügekontur (6c, 7c) aufweisen,
- wobei der erste Fügeschenkel (6) eine erste Fügekontur (6c) und der zweite Fügeschenkel (7) eine mit der ersten Fügekontur (6c) korrespondierende zweite Fügekontur (7c) aufweist, **dadurch gekennzeichnet**,
- dass die Fügekontur (6c) des ersten Fügeschenkels (6) eine Öffnungskontur ist, und
- dass die Fügekontur (7c) des zweiten Fügeschenkels (7) ein Fügezapfen (7c) ist, welcher in die als Öffnungskontur ausgebildete Fügekontur (6c) des ersten Fügeschenkels (6) formschlüssig eingreift.

2. Eckverbinder (4) nach Anspruch 1,
**dadurch gekennzeichnet,**
**dass** die Fügekonturen (6, 7) dreieckig, vorzugsweise mit gerundeten Ecken, ausgeführt sind.

3. Eckverbinder (4) nach Anspruch 1 oder 2,
**dadurch gekennzeichnet,**
**dass** der zweite Schenkelabschnitt (6d) des ersten Fügeschenkels (6) den zweiten Schenkelabschnitt (7b) des zweiten Fügeschenkels (7) zumindest teilweise umgreift.

4. Eckverbinder (4) nach einem der Ansprüche 1 bis 3,
**dadurch gekennzeichnet,**
**dass** die erste Fügekontur (6c) in einem Schenkelboden (6d) vorgesehen ist, an welchen eine, insbesondere etwa U-förmige, Schenkelwand (10) angeformt ist.

5. Eckverbinder (4) nach einem der Ansprüche 1 bis 4,
**dadurch gekennzeichnet,**
**dass** die zweite Fügekontur (7c) an eine Schenkelplatte (7d) angeformt ist.

6. Eckverbinder (4) Pollenschutzgitter nach Anspruch 5,
**dadurch gekennzeichnet,**
**dass** im Fügezustand der beiden Fügeschenkel (6, 7) des Eckverbinders (4) die Schenkelwand (10) der ersten Fügekontur (6c) die Schenkelplatte (7d) der zweiten Fügekontur (7c) an zwei gegenüberliegenden Seiten und an der dem zur Verbindung mit der Profilleiste (2, 3) dienenden ersten Schenkelabschnitt (7a) abgewandten Stirnseite übergreift.

7. Eckverbinder (4) nach einem der Ansprüche 1 bis 6,
**dadurch gekennzeichnet,**
**dass** die beiden Fügeschenkel (6, 7) miteinander verclipst oder verrastet sind, insbesondere mittels einer Nut-Feder-Verbindung oder einer Keilverbindung.

8. Eckverbinder (4) nach einem der Ansprüche 1 bis 7,
**dadurch gekennzeichnet,**
**dass** die Fügeschenkel (6, 7) mittels eines Bolzens (11) miteinander fixiert sind.

9. Eckverbinder (4) nach Anspruch 8,
**dadurch gekennzeichnet,**
**dass** in den zweiten Schenkelabschnitten (6b, 7b) der Fügeschenkel (6, 7) miteinander fluchtende Bolzenkanäle (12, 13) für den Bolzen (11) vorgesehen sind.

10. Eckverbinder (4) nach einem der Ansprüche 1 bis 9,
**dadurch gekennzeichnet,**
**dass** die Profilleisten (2, 3) mindestens eine in Profillängsrichtung verlaufende Fügekammer (8, 9) zur Aufnahme des ersten Schenkelabschnitts (6a, 7a) des jeweiligen Fügeschenkels (6, 7) des Eckverbinders (4) aufweisen.

11. Eckverbinder (4) nach einem der Ansprüche 1 bis 10,
**dadurch gekennzeichnet,**
**dass** die Profilleisten (2, 3) mindestens eine über einen profilrückseitigen Profillängsschlitz zugängliche Aufnahmekammer für ein Haltelement zur rahmenseitigen Befestigung eines Gittergewebes (5) aufweisen.

12. Eckverbinder (4) nach einem der Ansprüche 1 bis 11,
**dadurch gekennzeichnet,**
**dass** die Profilleisten (2, 3) teleskopartig verschiebbar zu Längs- und Querprofile zusammengesetzt sind.

13. Rahmensystem (1) für ein Insekten- und/oder Pollenschutzgitter, mit einer Anzahl an Profilleisten (2, 3), die in Rahmenecken mittels Eckverbindern (4) nach einem der Ansprüche 1-12 gefügt sind.

14. Insekten- und/oder Pollenschutzgitter mit einem Rahmensystem (1) nach Anspruch 13 sowie mit einem an dessen Profilleisten (2, 3) montierten oder montierbaren Gittergewebe (5).

## Claims

1. Corner connector (4) for positive plug-in connection of two profile strips (2, 3) in a frame corner of a frame system (1),
- wherein the corner connector (4) has a first joining leg (6) and a second joining leg (7) joinable therewith,
- wherein the joining legs (6, 7) have a first leg section (6a, 7a) for connection to the profile strip (2, 3) and a second leg section (6b, 7b) with a polygonal joining contour (6c, 7c),
- wherein the first joining leg (6) has a first joining contour (6c) and the second joining leg (7) has a second joining contour (7c) corresponding to the first joining contour (6c),
**characterized in**
- **that** the joining contour (6c) of the first joining leg (6) is an opening contour, and
- **that** the joining contour (7c) of the second joining leg (7) is a joining pin (7c), which engages positively in the joining contour (6c), designed as an opening contour, of the first joining leg (6).

2. Corner connector (4) according to claim 1,
**characterized in**
**that** the joining contours (6, 7) are triangular, preferably with rounded corners.

3. Corner connector (4) according to claim 1 or 2,
**characterized in**
**that** the second leg section (6d) of the first joining leg (6) at least partially engages around the second leg section (7b) of the second joining leg (7).

4. Corner connector (4) according to one of claims 1 to 3,
**characterized in**
**that** the first joining contour (6c) is provided in a leg base (6d), to which a, in particular approximately U-shaped, leg wall (10) is integrally formed.

5. Corner connector (4) according to one of claims 1 to 4,
**characterized in**
**that** the second joining contour (7c) is formed on a leg plate (7d).

6. Corner connector (4) according to claim 5,
**characterized in**
**that**, in the joined state of the two joining legs (6, 7) of the corner connector (4), the leg wall (10) of the first joining contour (6c) engages over the leg plate (7d) of the second joining contour (7c) on two opposite sides and on the end face facing away from the first leg section (7a) used for the connection to the profile strip (2, 3).

7. Corner connector (4) according to one of claims 1 to 6,
**characterized in**
**that** the two joining legs (6, 7) are clipped or latched to each other, in particular by means of a tongue and groove connection or a wedge connection.

8. Corner connector (4) according to one of claims 1 to 7,
**characterized in**
**that** the joining legs (6, 7) are fixed to each other by means of a bolt (11).

9. Corner connector (4) according to claim 8,
**characterized in**
**that** bolt channels (12, 13) for the bolt (11), which are aligned with each other, are provided in the second leg sections (6b, 7b) of the joining legs (6, 7).

10. Corner connector (4) according to one of claims 1 to 9,
**characterized in**
**that** the profile strips (2, 3) have at least one joining chamber (8, 9) running in the longitudinal direction of the profile for receiving the first leg section (6a, 7a) of the respective joining leg (6, 7) of the corner connector (4).

11. Corner connector (4) according to one of claims 1 to 10,
**characterized in**
**that** the profile strips (2, 3) have at least one receiving chamber, accessible via a profile longitudinal slot on the rear side of the profile, for a holding element for fastening a mesh fabric (5) on the frame side.

12. Corner connector (4) according to one of claims 1 to 11,
**characterized in**
**that** the profile strips (2, 3) are assembled in a telescopically displaceable manner to form longitudinal and transverse profiles.

13. Frame system (1) for an insect and/or pollen screen with a number of profile strips (2, 3) joined in frame corners by means of corner connectors (4).

14. Insect and/or pollen screen having a frame system (1) according to claim 13 and having a screen fabric (5) mounted or mountable on its profile strips (2, 3).

## Revendications

1. Connecteur d'angle (4) pour l'assemblage par liaison à enfichage et par complémentarité de forme de deux baguettes profilées (2, 3) dans un angle de cadre d'un système de cadre (1),
- le connecteur d'angle (4) comprenant une première branche d'assemblage (6) et une deuxième branche d'assemblage (7) pouvant être assemblée avec celle-ci,
- les branches d'assemblage (6, 7) comprenant une première section de branche (6a, 7a) pour la liaison avec la baguette profilée (2, 3) et une deuxième section de branche (6b, 7b) avec un contour d'assemblage polygonal (6c, 7c),
- la première branche d'assemblage (6) comprenant un premier contour d'assemblage (6c) et la deuxième branche d'assemblage (7) comprenant un deuxième contour d'assemblage (7c) correspondant au premier contour d'assemblage (6c),
**caractérisé en ce**
- **que** le contour d'assemblage (6c) de la première branche d'assemblage (6) est un contour d'ouverture, et
- **que** le contour d'assemblage (7c) de la deuxième branche d'assemblage (7) est un contour d'assemblage (7c), qui s'engage par complémentarité de forme dans le contour d'assemblage (6c) de la première branche d'assemblage (6) réalisé sous forme de contour d'ouverture.

2. Connecteur d'angle (4) selon la revendication 1,
**caractérisé en ce**
**que** les contours d'assemblage (6, 7) sont réalisés sous forme triangulaire, de préférence avec des coins arrondis.

3. Connecteur d'angle (4) selon la revendication 1 ou 2,
**caractérisé en ce**
**que** le deuxième tronçon de branche (6d) de la première branche d'assemblage (6) entoure au moins partiellement le deuxième tronçon de branche (7b) de la deuxième branche d'assemblage (7).

4. Connecteur d'angle (4) selon l'une des revendications 1 à 3,
**caractérisé en ce**
**que** le premier contour d'assemblage (6c) est prévu dans un tronçon de branche (6d), sur lequel est formée une paroi de branche (10), en particulier à peu près en forme de U.

5. Connecteur d'angle (4) selon l'une des revendications 1 à 4,
**caractérisé en ce**
**que** le deuxième contour d'assemblage (7c) est formé sur une plaque de branche (7d).

6. Connecteur d'angle (4) selon la revendication 5,
**caractérisé en ce**
**que**, dans l'état d'assemblage des deux branches d'assemblage (6, 7) du connecteur d'angle (4), la paroi de branche (10) du premier contour d'assemblage (6c) recouvre la plaque de branche (7d) du deuxième contour d'assemblage (7c) sur deux côtés opposés et sur la face frontale opposée à la première section de branche (7a) servant à l'assemblage avec la baguette profilée (2, 3).

7. Connecteur d'angle (4) selon l'une des revendications 1 à 6,
**caractérisé en ce**
**que** les deux branches d'assemblage (6, 7) sont clipsées ou encliquetées l'une avec l'autre, en particulier au moyen d'un assemblage à rainure et languette ou d'un assemblage à clavette.

8. Connecteur d'angle (4) selon l'une des revendications 1 à 7,
**caractérisé en ce**
**que** les branches d'assemblage (6, 7) sont fixées entre elles au moyen d'un boulon (11).

9. Connecteur d'angle (4) selon la revendication 8,
**caractérisé en ce**
**que** dans les deuxièmes sections de branche (6b, 7b) des branches d'assemblage (6, 7) sont prévus des canaux de boulon (12, 13) alignés entre eux pour le boulon (11).

10. Connecteur d'angle (4) selon l'une des revendications 1 à 9,
**caractérisé en ce**
**que** les baguettes profilées (2, 3) comprennent au moins une chambre d'assemblage (8, 9) s'étendant dans la direction longitudinale du profilé pour recevoir le premier tronçon de branche (6a, 7a) de la branche d'assemblage (6, 7) respective du connecteur d'angle (4).

11. Connecteur d'angle (4) selon l'une des revendications 1 à 10,
**caractérisé en ce**
**que** les baguettes profilées (2, 3) comprennent au moins une chambre de réception, accessible par une fente longitudinale de profilé située à l'arrière du profilé, pour un élément de retenue destiné à la fixation d'un tissu de grille (5) du côté du cadre.

12. Connecteur d'angle (4) selon l'une des revendications 1 à 11,
**caractérisé en ce**
**que** les baguettes profilées (2, 3) sont assemblées de manière à pouvoir être déplacées de manière télescopique pour former des profilés longitudinaux et transversaux.

13. Système de cadre (1) pour une moustiquaire et/ou une grille de protection contre le pollen, comprenant un certain nombre de baguettes profilées (2, 3), qui sont assemblées dans des coins du cadre au moyen de connecteurs d'angle (4).

14. Moustiquaire et/ou grille de protection contre le pollen avec un système de cadre (1) selon la revendication 13 ainsi qu'avec une toile de grille (5) montée ou pouvant être montée sur ses baguettes profilées (2, 3).
